**Europäisches Patentamt**

**European Patent Office**

**Office européen des brevets**

(19)

(11) Veröffentlichungsnummer: **0 347 972 B1**

(12) # EUROPÄISCHE PATENTSCHRIFT

(45) Veröffentlichungstag der Patentschrift :
**08.01.92 Patentblatt 92/02**

(51) Int. Cl.$^5$ : **C10B 53/02**

(21) Anmeldenummer : **89201514.0**

(22) Anmeldetag : **10.06.89**

(54) Verfahren zum Schwelen von Holz zur Erzeugung von Holzkohle.

(30) Priorität : **21.06.88 DE 3820913**

(43) Veröffentlichungstag der Anmeldung :
**27.12.89 Patentblatt 89/52**

(45) Bekanntmachung des Hinweises auf die
Patenterteilung :
**08.01.92 Patentblatt 92/02**

(84) Benannte Vertragsstaaten :
**BE DE ES FR GR**

(56) Entgegenhaltungen :
**WO-A-79/00610**
**BE-A- 836 515**

(73) Patentinhaber : **METALLGESELLSCHAFT AG**
**Reuterweg 14 Postfach 3724**
**W-6000 Frankfurt/M.1 (DE)**

(72) Erfinder : **Weiss, Hans-Jürgen, Dr.**
**Mühlenweg 41**
**W-6370 Oberursel (DE)**
Erfinder : **Schmalfeld, Jörg, Dr.**
**Dalienweg 19**
**W-6382 Friedrichsdorf (DE)**
Erfinder : **Dreher, Ingo, Dr.**
**Im Rosengärtchen 62**
**W-6370 Oberursel (DE)**
Erfinder : **Arnhold, Johannes**
**Hans-Hemberger-Strasse 39**
**W-6056 Heusenstamm (DE)**

EP 0 347 972 B1

## Beschreibung

Die Erfindung betrifft ein Verfahren zum Schwelen von Holz im Wanderbett in einem von heißem Spülgas durchströmten Schachtreaktor, in den man das Holz oben aufgibt und aus dessen unterem Bereich man die Holzkohle abführt, wobei man am oberen Ende des Schachtreaktors ein Schwelgase und Schweldämpfe enthaltendes Abgas abzieht, direkt in eine Brennkammer leitet und Verbrennungsgase der Brennkammer als heißes Spülgas im Schachtreaktor verwendet.

Ein solches Verfahren ist aus WO-A-79/00610 bekannt. Der Erfindung liegt die Aufgabe zugrunde, die Schwelung wirtschaftlich und möglichst umweltschonend durchzuführen. Erfindungsgemäß erreicht man dies dadurch, daß die Brennkammer getrennt vom Schachtreaktor angeordnet ist und einen ersten und einen zweiten beschnitt aufweist, daß man das Abgas im ersten beschnitt der Brennkammer mit Luft in unterstöchiometrischem bis stöchiometrischem Verhältnis bei Temperaturen von 800 bis 1250°C verbrennt, aus dem ersten Abschnitt einen Teil des Verbrennungsgases abzieht, außerhalb des Schachtreaktors auf Temperaturen von etwa 450 bis 900°C kühlt und als heißes Spülgas in den Schachtreaktor leitet, und daß man im zweiten Abschnitt der Brennkammer unter Luftzufuhr in überstöchiometrischer Menge das Abgas vollständig verbrennt.

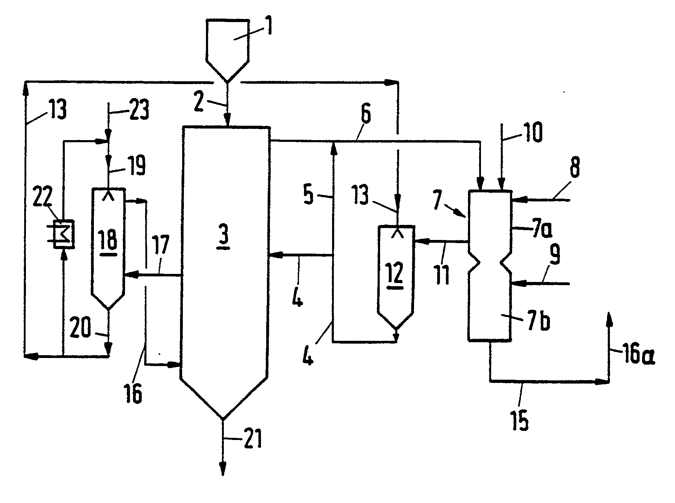

Ausgestaltungsmöglichkeiten des Verfahrens werden mit Hilfe der Zeichnung erläutert.

Das zu schwelende stückige Holz, das einen Feuchtigkeitsgehalt von üblicherweise 15 bis 30 Gew.-% und darüber aufweist, kommt aus dem Vorratsbunker (1) und gelangt durch die Leitung (2) in den Schachtreaktor (3), der nachfolgend auch als Schwelreaktor bezeichnet wird. Im Reaktor bildet das Holz eine Schüttung oder ein Wanderbett, das sich langsam nach unten bewegt. Die Schwelung erfolgt im direkten Kontakt mit heißen Spülgasen, die aus der Leitung (4) kommen und mit Temperaturen von 450 bis 900°C etwa in den mittleren Bereich des Reaktors eingeleitet werden. Beim Aufwärtsströmen der Spülgase wird das Holz geschwelt und im obersten Bereich des Reaktors getrocknet. Das entstehende Abgas, bestehend aus Spülgas, Schwelgas und Schweldämpfen, zieht man am oberen Ende des Reaktors (3) durch die Leitung (6) ab und leitet die Abgase in eine Brennkammer (7). Zur Verhinderung von Kondensation in der Leitung (6) kann es zweckmäßig sein, einen Teilstrom der heißen Spülgase durch die Leitung (5) zuzugeben.

Die Brennkammer (7) weist zwei Abschnitte auf, in welcher unterschiedliche Verbrennungsbedingungen herrschen. Dem ersten Abschnitt (7a) führt man durch die Leitung (8) Luft im unterstöchiometrischem bis gerade stöchiometrischem Verhältnis zu, so daß dort die Oxidation der brennbaren Bestandteile nicht vollständig erfolgt und möglichst kein oder kaum freier Sauerstoff in den Verbrennungsgasen enthalten ist. Falls erforderlich, z.B. beim Anfahren, wird durch die Leitung (10) Zusatzbrennstoff herangeführt.

Aus dem ersten Abschnitt (7a) der Brennkammer zieht man durch die Leitung (11) den für die Schwelung im Reaktor (3) benötigten Teil der Verbrennungsgase mit Temperaturen im Bereich von 800 bis 1250°C ab. Diese Verbrennungsgase kann man je nach gewünschter Temperatur durch einen Einspritzkühler (12) leiten, dem man durch die Leitung (13) Wasser aufgibt. Neben Frischwasser kann hier auch im Verfahren anfallendes Abwasser verwendet werden.

Je nach der gewünschten Wärmenutzung können die heißen Verbrennungsgase der Leitung (11) auch indirekt durch Vorwärmung der Verbrennungsluft der Leitungen (8) und (9) auf die für die Schwelung erforderliche Temperatur gekühlt werden.

Das gekühlte Verbrennungsgas, das einen Wasserdampfgehalt von 40 bis 60 Vol.-% und je nach Einzelfall eine Temperatur im Bereich von 450 bis 900°C aufweist, führt man in der Leitung (4) dem Schwelreaktor (3) als Spülgas zu.

In der Brennkammer (7) gelangen die restlichen Gase in den zweiten Abschnitt (7b) und werden dort mit Luft aus der Leitung (9) vollständig, d.h. mit Sauerstoff-Überschuß, verbrannt. Auf diese Weise werden störende Bestandteile weitgehend beseitigt. Die Verbrennungsgase können deshalb üblicherweise ohne weitere Behandlung in der Leitung (15) abgezogen und durch den Kamin (16a) in die Atmosphäre geleitet werden. Es ist möglicherweise auch zweckmäßig, die Verbrennungsluft der Leitungen (8) und (9) durch indirekten Wärmeaustausch mit den Abgasen der Leitung (15) vorzuwärmen, was in der Zeichnung aber nicht berücksichtigt wurde.

Die im Schwelreaktor (3) erzeugte Holzkohle wird im unteren Abschnitt des Reaktors gekühlt. Hierzu dient Kühlgas, das man mit Temperaturen von etwa 30 bis 60°C in der Leitung (16) zuführt, das im Wanderbett des Reaktors (3) nach oben strömt, in der Leitung (17) abgezogen wird und im Kreislauf durch einen Naß-Gaskühler (18) und die Leitung (16) zurückgeführt wird. Das Kühlwasser kommt aus der Leitung (19) und verläßt den Kühler durch die Leitung (20).

Das Abwasser der Leitung (20) wird teilweise über einen Rückkühler (22) auf die erforderliche Temperatur von etwa 20 bis 40°C gebracht und im Kreislauf zurück zum Naß-Gaskühler (18) geführt. Frischwasser kommt aus der Leitung (23). Einen Teilstrom des feststoffhaltigen Abwassers kann man durch die Leitung (13) dem Einspritzkühler (12) aufgeben.

Beispiel 1

In einer der Zeichnung entsprechenden Verfahrensführung wird stückiges Eukalyptus-Holz mit einem Feuchtigkeitsgehalt von 15 Gew.-% geschwelt und zu Holzkohle mit durchschnittlich 92 % fixem Kohlenstoffanteil umgewandelt. Die maximale Temperatur im Schwelreaktor (3) beträgt 650°C.

Die nachfolgenden Angaben beziehen sich auf 1 kg Holztrockensubstanz im Holzeinsatz. Dem Reaktor (3) werden durch die Leitung (4) 0,75 Nm³ (Nm³ = m³ im Normzustand) an heißem Spülgas mit 680°C zugeführt. Das Abgas, das mit maximal 140°C den Reaktor (3) verläßt, wird durch Zumischen von 0,12 Nm³ heißem Spülgas aus der Leitung (5) auf 180°C erhitzt. In der Brennkammer liegen die Temperaturen bei 1120°C. Insgesamt werden in der Brennkammer 3 Nm³ Verbrennungsgase erzeugt. Im Einspritzkühler (12) werden 0,15 kg Abwasser verbraucht. Das Kühlgas der Leitung (16) hat eine Temperatur von 50°C und das abgezogene Gas der Leitung (17) eine Temperatur von 350°C. Die erzeugte Holzkohle wird in der Metallurgie als Reduktionsmittel eingesetzt.

Beispiel 2

Ebenfalls in einer der Zeichnung entsprechenden Verfahrensführung wird stückiges Eichenholz mit einem Feuchtigkeitsgehalt von 20 Gew.-% bei einer Temperatur von maximal 430°C geschwelt und dabei eine Holzkohle mit durchschnittlich 82 % fixem Kohlenstoffanteil erzeugt. Die Holzkohle kann beispielsweise zum Grillen verwendet werden.

Die Verbrennungstemperaturen liegen in der Brennkammer bei 935°C. Die nachfolgenden Angaben beziehen sich wiederum auf 1 kg Holztrockensubstanz im Holzeinsatz. In der Brennkammer werden Verbrennungsgase in einer Gesamtmenge von 3,8 Nm³ erzeugt, ein Teilstrom von 1,3 Nm³ wird dem Reaktor (3) als heißes Spülgas mit einer Temperatur von 480°C zugeführt. Das Spülgas war zuvor im Einspritzkühler (12) mit 0,23 kg Abwasser aus dem Gas-Kühlkreislauf gekühlt worden. Das Abgas verläßt den Reaktor (3) mit einer Temperatur von etwa 120°C und wird durch Zumischen von 0,24 Nm³ heißem Spülgas aus der Leitung (5) auf 180°C erhitzt. Die Temperatur in der Leitung (16) beträgt 40°C und in der Leitung (17) 250°C.

Patentansprüche

1. Verfahren zum Schwelen von Holz im Wanderbett in einem von heißem Spülgas durchströmten Schachtreabtor, in den man das Holz oben aufgibt und aus dessen unterem Bereich man die Holzkohle abführt, wobei man am oberen Ende des Schachtreaktors ein Schwelgase und Schweldämpfe enthaltendes Abgas abzieht, direkt in eine Brennkammer leitet und Verbrennungsgase der Brennkammer als heißes Spülgas im Schachtreaktor verwendet, dadurch gekennzeichnet, daß die Brennkammer getrennt vom Schachtreaktor angeordnet ist und einen ersten und einen zweiten Abschnitt aufweist, daß man das Abgas im ersten Abschnitt der Brennkammer mit Luft in unterstöchiometrischem bis stöchiometrischem Verhältnis bei Temperaturen von 800 bis 1250°C verbrennt, aus dem ersten Abschnitt einen Teil des Verbrennungsgases abzieht, außerhalb des Schachtreabtors auf Temperaturen von etwa 450 bis 900°C kühlt und als heißes Spülgas in den Schachtreaktor leitet, und daß man im zweiten Abschnitt der Brennkammer unter Luftzufuhr in überstöchiometrischer Menge das Abgas vollständig verbrennt.

2. Verfahren nach Anspruch 1, dadurch gekennzeichnet, daß man einen Teilstrom des gekühlten Verbrennungsgases dem aus dem Schachtreaktor abgezogenen Abgas zumischt.

3. Verfahren nach Anspruch 1 oder 2, dadurch gekennzeichnet, daß man das aus dem ersten Abschnitt der Brennkammer abgezogene Verbrennungsgas durch Einspritzen von Wasser kühlt.

4. Verfahren nach Anspruch 1 oder einem der folgenden, dadurch gekennzeichnet, daß man die Holzkohle im unteren Bereich des Schachtreaktors mit im Kreislauf geführtem Kühlgas kühlt, wobei die Kühlung des Kühlgases durch Einspritzen von Wasser in einem Naß-Gaskühler erfolgt und das aus dem Naß-Gaskühler abgezogene Wasser mindestens teilweise zum Kühlen des aus dem ersten Abschnitt der Brennkammer abgezogenen Verbrennungsgases verwendet wird.

5. Verfahren nach Anspruch 1 oder einem der folgenden, dadurch gekennzeichnet, daß man die Verbrennungsluft durch indirekten Wärmeaustausch mit Verbrennungsgasen der Brennkammer erhitzt.

Claims

1. A process of carbonizing wood in a moving bed shaft reactor, which is flown through by hot rinse gas and is charged with the wood at the top and wood charcoal is withdrawn from the lower portion of the reactor, wherein an exhaust gas which contains gases and vapors produced by the carbonization is withdrawn from the top end of the shaft reactor and is directly fed to a combustion chamber and combustion gases from the combustion chamber are used as hot rinse gas in the shaft reactor, characterized in that the combustion chamber is separated from the shaft reactor and is provided with a first and a second section, the exhaust gas is combusted in the first section of the combustion chamber with air at an understoichiometric to stoichiometric rate at temperatures from 800 to 1250°C, part of the combustion gas is withdrawn from the first section and is cooled outside of the shaft reactor to temperatures from about 450 to 900°C and is fed as hot rinse gas to the shaft reactor, and the exhaust gas is completely combusted in the second section of the combustion chamber with air supplied at an overstoichiometric rate.

2. A process according to claim 1, characterized in that a partial stream of the cooled combustion gas is mixed with the exhaust gas withdrawn from the shaft reactor.

3.. A process according to claim 1 or 2, characterized in that the combustion gas which has been withdrawn from the first section of the combustion chamber is cooled by an injection of water.

4. A process according to claim 1 or any of the following claims, characterized in that the wood charcoal is cooled in the lower portion of the shaft reactor with a cooling gas which is recirculated, wherein the cooling gas is cooled by an injection of water in a wet-process gas cooler and at least part of the water withdrawn from the wet-process gas cooler is used to cool the combustion gas which has been withdrawn from the first section of the combustion chamber.

5. A process according to claim 1 or any of the following claims, characterized in that the combustion air is heated by an indirect heat exchange with combustion gases from the combustion chamber.

## Revendications

1. Procédé de carbonisation du bois en lit mobile dans un réacteur à cuve parcouru par du gaz chaud de balayage, qui consiste à charger le bois par le haut et à évacuer le charbon de bois de sa partie inférieure en soutirant, à l'extrémité supérieure du réacteur à cuve, un effluent gazeux contenant des gaz de carbonisation et des vapeurs de carbonisation, que l'on envoie directement dans une chambre de combustion, les gaz de combustion de la chambre de combustion étant utilisés comme gaz chaud de balayage dans le réacteur à cuve, caractérisé en ce qu'il consiste à prévoir une chambre de combustion distincte du réacteur à cuve et comportant une première partie et une seconde partie, à faire brûler l'effluent gazeux dans la première partie de la chambre de combustion par de l'air en un rapport hypostoechiométrique à stoechiométrique, à des températures de 800 à 1250°C, à soutirer de la première partie une partie du gaz de combustion, à la refroidir à l'extérieur du réacteur à cuve jusqu'à des températures de 450 à 900°C environ et à l'envoyer comme gaz chaud de balayage dans le réacteur à cuve et à brûler entièrement l'effluent gazeux dans la seconde partie de la chambre de combustion avec apport d'air en une quantité hyperstoechiométrique.

2. Procédé suivant la revendication 1, caractérisé en ce qu'il consiste à mélanger un courant partiel du gaz de combustion refroidi à l'effluent gazeux soutiré du réacteur à cuve.

3. Procédé suivant la revendication 1 ou 2, caractérisé en ce qu'il consiste à refroidir, par projection d'eau, le gaz de combustion soutiré de la première partie de la chambre de combustion.

4. Procédé suivant la revendication 1 ou l'une des suivantes, caractérisé en ce qu'il consiste à refroidir le charbon de bois à la partie inférieure du réacteur à cuve par du gaz de refroidissement circulant en circuit fermé, le refroidissement du gaz de refroidissement par projection d'eau s'effectuant dans un dispositif de refroidissement du gaz en voie humide et l'eau soutirée du dispositif de refroidissement du gaz en voie humide étant utilisée, au moins partiellement, pour refroidir le gaz de combustion soutiré de la première partie de la chambre de combustion.

5. Procédé suivant la revendication 1 ou l'une des suivantes, caractérisé en ce qu'il consiste à chauffer l'air de combustion par échange indirect de chaleur avec les gaz de combustion de la chambre de combustion.